# EUROPÄISCHE PATENTSCHRIFT

(11) **EP 1 455 156 B1**
(45) Veröffentlichungstag und Bekanntmachung des Hinweises auf die Patenterteilung: **02.01.2008**
(21) Anmeldenummer: 04004625.2
(22) Anmeldetag: 01.03.2004
(51) Int. Cl.: F28D 20/02

(54) **Raumtemperierungseinrichtung**
Room temperature conditioner
Conditioneur de température d'habitat

(30) Priorität: 04.03.2003 DE 20303514 U; 09.07.2003 DE 20310593 U; 08.09.2003 DE 20314018 U
(43) Veröffentlichungstag der Anmeldung: 08.09.2004
(73) Patentinhaber: Imtech Deutschland GmbH & Co. KG, 22047 Hamburg (DE)
(72) Erfinder: Detzer, Rüdiger, Prof. Dr.-Ing., 35418 Buseck (DE); Boiting, Bernd, Dr.-Ing., 48565 Steinfurt (DE)
(74) Vertreter: Gerbaulet, Hannes

(56) Entgegenhaltungen:
- GB-A- 2 327 751
- US-A- 2 677 243
- US-A- 5 860 287
- US-A1- 2002 088 246
- US-B1- 6 393 861

## Beschreibung

Die Erfindung betrifft eine Raumtemperierungseinrichtung gemäß dem Oberbegriff des Anspruchs 1.

Es ist aus dem Stand der Technik bekannt, eine Raumtemperierungseinrichtung zu verwenden, in dem ein Wärmeaustauscher angeordnet ist. Hierbei kann es sich um diverse Wärmeaustauscher handeln, die beispielsweise im Gleichstrom, Kreuzstrom oder Gegenstrom betrieben werden. In der Regel wird bei den bekannten Raumtemperierungseinrichtungen Umgebungsluft angesaugt, die über den Wärmeaustauscher strömt. Aufgrund des Temperaturgefälles zwischen dem Wärmeaustauscher und der Umgebungsluft entsteht ein Wärmestrom vom wärmeren zum kälteren Medium. Soll beispielsweise die Raumluft gekühlt werden, wird der angesaugten Umgebungsluft Wärme durch den kälteren Wärmeaustauscher entzogen und anschließend durchströmt die gekühlte Umgebungsluft die Luftaustrittsöffnung und gelangt so in den zu kühlenden Raum. Es ist ebenfalls bekannt, diese Raumtemperierungseinrichtung zur Raumlufterwärmung zu betreiben. Hierbei umströmt die Umgebungsluft den Wärmeaustauscher, der durch ein Medium aufgeheizt ist, und nimmt gleichzeitig Wärme auf. Die erwärmte Umgebungsluft verlässt anschließend die Raumtemperierungseinrichtung über die Luftaustrittsöffnung. Einer der Nachteile dieser bekannten Raumtemperierungseinrichtungen ist jedoch, dass trotz immer modernerer Wärmeaustauscher ein großer Betrag an Energie notwendig ist, die Raumluft auf die entsprechende Temperatur zu bringen.

Daher ist häufig vorgesehen, dass die Raumtemperierungseinrichtung einen ersten Wärmeaustauscher, der ein Phasenwechselmaterial (Phase Change Material) umfasst, in einem ersten Strömungsbereich der Umgebungsluft aufweist. Des Weiteren wird häufig ein zweiter, von einem Fluid durchströmter Wärmeaustauscher in einem zweiten Strömungsbereich der Umgebungsluft, der sich an den ersten Strömungsbereich anschließt, angeordnet. Das Phasenwechselmaterial (PCM) bietet den wesentlichen Vorteil, dass es als Latentwärmespeicher einen hohen Wirkungsgrad aufweist. Hierbei kann das Phasenwechselmaterial beispielsweise ein Salz, ein Salzhydrat, ein Gemisch von Salzen und/oder Salzhydraten und/oder ein organisches Material sein, welches Wärme in Form von Schmelzwärme ("latente" Wärme) speichert. Prinzipiell "arbeitet" das Phasenwechselmaterial in der Weise, dass beim Schmelzen, das heißt, wenn das PCM von der festen in die flüssige Phase übergeht, Wärme verbraucht wird beziehungsweise Wärme aufgenommen wird. Solange der flüssige Zustand bestehen bleibt, wird diese Wärme latent durch das PCM gespeichert. Beim Erstarren, das bedeutet, wenn das PCM von der flüssigen in die feste Phase übergeht, wird die oben genannte latente Wärme wieder frei. Somit bietet das PCM insbesondere bei Raumtemperierungseinrichtung den wesentlichen Vorteil, dass es Wärme aus der Umgebung aufnehmen und abführen kann, wodurch sich der Wirkungsgrad einer Raumtemperierungseinrichtung wesentlich erhöhen lässt.

Eine derartige Raumtemperierungseinrichtung ist aus der Patentschrift US 2 677 243 A bekannt. Die US 2 677 243 A offenbart eine Vorrichtung für die Speicherung von Wärme. Dazu ist eine Luftkammer vorgesehen, durch die Luft strömt. Innerhalb der Luftkammer ist eine Anzahl von dünnwandigen und zylinderförmigen Bauelementen angeordnet, die in der Terminologie der US 2 677 243 A als Behälter bezeichnet werden. In diesen Behältern befinden sich chemische Zusammensetzungen, die die Eigenschaft von "Phase Change Materials" aufweisen.

Im Falle von beispielsweise Temperaturspitzen kann es jedoch vorkommen, dass der Wärmeaustauscher nicht genügend weit die Temperatur der Umgebungsluft abkühlen bzw. erwärmen kann. In diesem Fall ist die Wirkung des Wärmeaustauschers begrenzt.

Ausgehend von den vorstehend dargelegten Nachteilen und Unzulänglichkeiten sowie unter Würdigung des umrissenen Standes der Technik bei einer Raumtemperierungseinrichtung liegt der vorliegenden Erfindung die Aufgabe zugrunde, eine Raumtemperierungseinrichtung so auszubilden, dass die Umgebungsluft je nach Bedarf abgekühlt bzw. erwärmt wird.

Diese Aufgabe wird durch eine Raumtemperierungseinrichtung mit den in Anspruch 1 angegebenen Merkmalen gelöst.

Durch die erfindungsgemäße Raumtemperierungseinrichtung ist gewährleistet, dass ein weiterer Wärmeaustauscher aktiviert wird, der der Umgebungsluft weitere Wärme entziehen bzw. zuführen kann, sofern ein erster Wärmeaustauscher nicht genügend weit die Temperatur der Umgebungsluft abkühlen bzw. erwärmen kann. Es wird somit gewissermaßen ein Instrumentarium geschaffen, welches sich dazu eignet, je nach Bedarf die Kühlung bzw. Erwärmung der Umgebungsluft variabel zu gestalten. Prinzipiell ist die Reihenschaltung bzw. Parallelschaltung einer Vielzahl von Wärmeaustauschern denkbar. Von Bedeutung ist es auch, dass bei der Reihenschaltung in Strömungsrichtung (S) zwischen den beiden ersten Wärmeaustauschern ein Ventilator angeordnet ist, so dass eine optimale Durchströmung der mit Phasenwechselmaterial geladenen Wärmeaustauscher trotz des durch die Wärmeaustauscher gebildeten Strömungswiderstandes sichergestellt ist. Die Frage, welche Anordnung für die Wärmeaustauscher zu bevorzugen ist, richtet sich in erster Linie nach Bauform und Dimensionierung der Raumtemperierungseinrichtung.

Erfindungsgemäß kann die Raumtemperierungseinrichtung zur Raumlufterwärmung und zur Raumluftkühlung betrieben werden. Bei der Raumluftkühlung gelangt die Umgebungsluft durch die Lufteintrittsöffnung in den ersten Strömungsbereich der Raumtemperierungseinrichtung, wobei sie entlang des ersten Wärmeaustauschers, der vorzugsweise ein Plattenwärmeaustauscher ist, strömt. Hierbei wird die Luft in dem ersten Strömungsbereich gekühlt, während das im ersten Wärmeaustauscher angeordnete, aufgeladene PCM von der festen in die flüssige Phase übergeht. Die abgekühlte Umgebungsluft gelangt anschließend in den zweiten Strömungsbereich, in dem der zweite Wärmeaustauscher angeordnet ist. Je nach Betriebsfall kann auch hier eine weitere Abkühlung der Umgebungsluft stattfinden. Im Falle von beispielsweise Temperaturspitzen, bei denen der erste Wärmeaustauscher nicht genügend weit die Temperatur der Umgebungsluft abkühlen kann, wird der zweite Wärmeaustauscher aktiviert, der der Umgebungsluft weitere Wärme entzieht. Hierbei ist vorzugsweise der zweite Wärmeaustauscher mit einem Kühlsystem, insbesondere einer Kältemaschine verbunden, das das durch den zweiten Wärmeaustauscher strömende Fluid auf die notwendige niedrige Temperatur bringt. Das Fluid, das vorzugsweise Wasser ist, wird im erwärmten Zustand dem zweiten Wärmeaustauscher wieder abgeführt. Ist beispielsweise das PCM entladen, das bedeutet, ist das PCM in der flüssigen Phase, wird ebenfalls der zweite Wärmeaustauscher aktiviert, um die Umgebungsluft auf die entsprechende niedrige Temperatur zu bringen. Für die Wirkungsweise der Einrichtung ist es dabei unerheblich, ob der erste Wärmetauscher bzw. der erste Strömungsbereich in Strömungsrichtung hinter dem zweiten Wärmetauscher bzw. dem zweiten Strömungsbereich angeordnet ist.

Bei der Raumlufterwärmung befindet sich das aufgeladene PCM in der flüssigen Phase. Wird durch die Lufteintrittsöffnung kalte Umgebungsluft in die Raumtemperierungseinrichtung angesaugt, strömt diese zunächst über den ersten Wärmeaustauscher. Hierbei geht das PCM des ersten Wärmeaustauschers von der flüssigen in die feste Phase über, wobei gleichzeitig die Umgebungsluft Wärme aufnimmt. Reicht die durch den ersten Wärmeaustauscher übertragende Wärme nicht aus, die Umgebungsluft auf die gewünschte Temperatur zu bringen, wird der im zweiten Strömungsbereich angeordnete zweite Wärmeaustauscher aktiviert. Der zweite Wärmeaustauscher ist mit einem Heizsystem verbunden, das beispielsweise den zweiten Wärmeaustauscher mit erwärmtem Wasser versorgt. ist das PCM entladen, das bedeutet, ist das PCM in der festen Phase, ist eine Erwärmung der Umgebungsluft im ersten Wärmeaustauscher nicht möglich, so dass in diesem Fall ebenfalls der zweite Wärmeaustauscher aktiviert wird.

Bei einer weiteren Ausgestaltung der Erfindung ist der zweite Wärmeaustauscher als Rippenrohrwärme- und/oder als Lamellenrohrwärmeaustauscher ausgebildet. Durch den Einsatz von Rippen oder Lamellen können im Vergleich zu glatten Rohren größere Wärmeübertragungsflächen realisiert werden, wodurch eine kompakte, leistungsfähige Wärmeübertragerkonstruktion erzielbar ist. Die Rippen können beispielsweise spiralförmig auf dem Rohr angeordnet sein, wobei es sich vorzugsweise um ein Stahlband handeln kann, welches auf das Rohr gewickelt ist und an seinen beiden Enden am Rohr befestigt ist. Die Rippen sitzen durch den Wickelvorgang straff auf dem Rohr auf und können zusätzlich wie bei der Lamellenrohrkonfiguration durch einen Überzug wärmeleitend mit dem Rohr verbunden sein. Als Wärmeübertragungsflächen sowohl Rippen als auch Lamellen in einem Wärmeaustauscher zu verwenden, ist ebenfalls denkbar.

Gemäß der Erfindung sind zwei erste Wärmetauscher vorgesehen, die jeweils ein Phasenwechselmaterial umfassen. Diese können in Strömungsrichtung hintereinander als Reihenschaltung oder auch nebeneinander als Parallelschaltung angeordnet sein. Es wird vorgesehen, dass in Strömungsrichtung zwischen den beiden ersten Wärmetauschern ein Ventilator angeordnet ist, so dass eine optimale Durchströmung der mit Phasenwechselmaterial beladenen Wärmetauscher trotz des durch die Wärmetauscher gebildeten Strömungswiderstandes sichergestellt ist.

Die gesamte Raumtemperierungseinrichtung ist vorteilhafterweise in einem einheitlichen Gehäuse angeordnet, das als Kompakteinheit ausgebildet ist. Dies bietet nicht nur Montage- und Austauschfreundlichkeit, sondern auch die Möglichkeit, das Gehäuse der Raumtemperierungseinrichtung aus feuerhemmenden oder feuerfesten Material auszubilden. Zusätzlich oder alternativ kann auch jedes einzelnen PCM-Elementes aus feuerhemmendem und/oder feuerfestem Material ausgebildet sein, um einen optimalen Brandschutz sicherzustellen. Vorteilhafterweise wird als feuerhemmendes oder feuerfestes Material Formglas und/oder Silikatplatten und/oder Kalizium-Silikat und/oder eine Folie verwendet.

Soll zum Beispiel das Phasenwechselmaterial von der flüssigen in die feste Phase versetzt werden, wird im Umluftbetrieb der zweite Wärmeaustauscher mit einem gekühlten Fluid versorgt, so dass die innerhalb der Raumtemperierungseinrichtung zirkulierende Luft abgekühlt wird. Gleichzeitig strömt die abgekühlte Luft in den ersten Strömungsbereich, in dem der erste Wärmeaustauscher mit dem Phasenwechselmaterial angeordnet ist. Hierbei wird die im PCM latent gespeicherte Wärme frei, wobei das Material sich von der flüssigen in die feste Phase versetzt wird. Die frei gewordene Wärme wird durch die Umluft aufgenommen, die in den sich anschließenden zweiten Strömungsbereich strömt und dort wiederum durch den zweiten Wärmeaustauscher abgekühlt wird. Im aufgeladenen Zustand des PCM kann der erste Wärmeaustauscher zuverlässig den Raum mit kühler Luft versorgen.

Der Umluftbetrieb kann ebenfalls dafür verwendet werden, das Phasenwechselmaterial zu laden, indem dem PCM Wärme zugeführt wird. In diesem Fall wird der zweite Wärmeaustauscher durch ein erwärmtes Fluid durchflossen, wobei gleichzeitig die sich im Umluftbetrieb befindende Luft im zweiten Strömungsbereich erwärmt wird. Die erwärmte Luft gelangt anschließend in den Umluftkanal, der in den ersten Strömungsbereich mündet. Dort wird das im ersten Wärmeaustauscher angeordnete PCM von der festen in die flüssige Phase versetzt, wobei gleichzeitig der Umgebungsluft Wärme entzogen wird, die in dem sich anschließenden zweiten Strömungsbereich erneut aufgewärmt wird. Auf diese Art wird das PCM aufgeladen, um im aufgeladenen Zustand den Raum mit warmer Umgebungsluft zu versorgen.

Eine weitere Möglichkeit zur Ladung des PCM besteht darin, dass die Raumtemperierungseinrichtung mit mindestens einer Öffnung ausgebildet ist, die unmittelbar am Umluftkanal angeordnet ist. Hierbei ist die Lufteintrittsöffnung geöffnet und die Luftaustrittsöffnung durch das Umschaltmittel geschlossen. In diesem Betriebszustand wird Umgebungsluft durch die Lufteintrittsöffnung in die Raumtemperierungseinrichtung befördert. Hierbei kann es sich um kühle Umgebungsluft handeln, beispielsweise kühle Nachtluft, wodurch das PCM in die feste Phase versetzt wird und für den Kühlbetrieb aufgeladen wird. Die eingesaugte Luft strömt hierbei durch den ersten und den zweiten Strömungsbereich, wobei der zweite Wärmeaustauscher in diesem Betriebszustand deaktiviert ist. Anschließend gelangt die Umgebungsluft in den Umluftkanal und wird von dort durch die Öffnung wieder in die Umgebung geleitet.

Selbstverständlich kann auch warme Umgebungsluft in die Raumtemperierungseinrichtung geleitet werden, um das PCM für den Heizbetrieb aufzuladen. In diesem Fall wird das PCM von der festen in die flüssige Phase versetzt. Auch hier strömt die Umluft über den ersten und den zweiten Strömungsbereich in den Umluftkanal und anschließend durch die Öffnung in die Umgebung.

Nachstehend wird die Erfindung anhand der beigefügten Zeichnungen erläutert. Es zeigen
- Fig. 1: eine Raumtemperierungseinrichtung in rein schematischer Darstellung in einem ersten Betriebszustand gemäß dem Stand der Technik,
- Fig. 2: die Raumtemperierungseinrichtung in einem zweiten Betriebszustand,
- Fig. 3: die Raumtemperierungseinrichtung in einem dritten Betriebszustand,
- Fig. 4: eine schematische Darstellung von 18 PCM-Elementen, in einer herkömmlichen Anwendung mit einer Lufteintritts- und einer Luftaustrittsöffnung, die mit einem Wärmetauscher kombiniert sind;
- Fig. 5: eine schematische Darstellung von 18 PCM-Elementen, in einer herkömmlichen Anwendung mit einer Lufteintritts- und einer Luftaustrittsöffnung;
- Fig. 6: eine schematische Darstellung von 7 PCM-Elementen, welche in eine Brüstung integriert sind gemäß dem Stand der Technik;
- Fig. 7: eine schematische Darstellung von 8 PCM-Elementen, welche hinter einem Schrank angeordnet sind gemäß dem Stand der Technik;
- Fig. 8: eine schematische Darstellung einer Raumtemperierungseinrichtung als Kompaktgerät im Kühlungs-/Heizungsbetrieb gemäß der Erfindung;
- Fig. 9: eine schematische Darstellung der Raumtemperierungseinrichtung gemäß Fig. 8 im Umluft-/Speicherbetrieb;
- Fig. 10: eine schematische Darstellung einer Raumtemperierungseinrichtung als Brüstungsgerät mit Schichtluftauslass gemäß der Erfindung ;
- Fig. 11: eine schematische Darstellung einer Raumtemperierungseinrichtung als Fußbodengerät mit Außenwandanschluss gemäß der Erfindung;
- Fig. 12a und Fig. 12b: in schematischen Darstellungen eine Raumtemperierungseinrichtung als Schrankgerät in zwei Einbaulagen, und
- Fig. 13: eine schematische Darstellung einer Raumtemperierungseinrichtung als Deckengerät in einer abgehängten Decke gemäß der Erfindung.

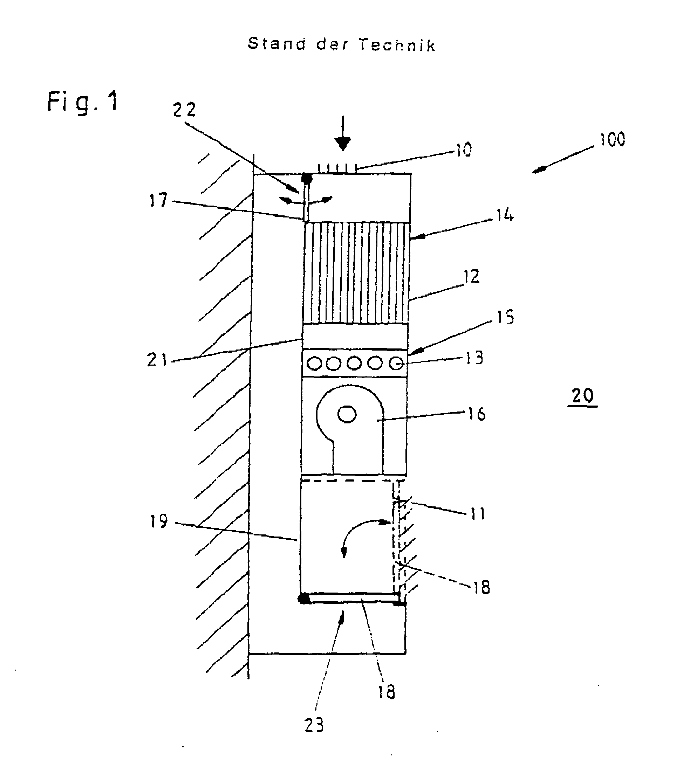

Die Figuren 1 bis 7 stellen den Stand der Technik dar, die das Verständnis der Erfindung erleichtern. Figur 1 zeigt die Raumtemperierungseinrichtung 100 mit einer Lufteintrittsöffnung 10 und einer Luftaustrittsöffnung 11. Innerhalb der Raumtemperierungseinrichtung 100 ist ein Plattenwärmeaustauscher 12 aus PCM in einem ersten Strömungsbereich 14 sowie ein Rippenrohrwärmeaustauscher 13 in einem zweiten Strömungsbereich 15 angeordnet, wobei bei dieser Ausführungsform der erstgenannte Wärmeaustauscher 12 der Lufteintrittsöffnung 10 zugewandt ist. Unterhalb des Rippenrohrwärmeaustauschers 13 ist ein Ventilator 16 positioniert. Des Weiteren weist die Raumtemperierungseinrichtung 100 einen Umluftkanal 19 auf, der durch eine Wandung 21 vom ersten und vom zweiten Strömungsbereich 14,15 im wesentlichen getrennt ist.

Im Bereich der Lufteintritts- und Luftaustrittsöffnung 10,11 sind ferner Umschaltmittel 17,18 angeordnet, die je nach Betriebszustand der Raumtemperierungseinrichtung 100 die Öffnungen 10, 11 schließen oder öffnen können. Bei der darstellten Ausführungsform sind die Umschaltmittel 17,18 als Klappen ausgebildet, die drehbar oder schwenkbar an den Öffnungen 10,11 befestigt sind. Im vorliegenden Betriebszustand ist die Klappe 17 der Lufteintrittsöffnung 10 (obere Klappe) in vertikaler Position, so dass die Lufteintrittsöffnung 10 geöffnet ist und somit Umgebungsluft in den Innenraum der Raumtemperierungseinrichtung 100 einströmen kann. Die Raumtemperierungseinrichtung 100 ist darüber hinaus derart ausgebildet, dass in der beschriebenen Position der oberen Klappe 17 die Lufteintrittsöffnung 22 vom Umluftkanal 19 zum Strömungsbereich 14 geschlossen ist, so dass der Umluftkanal 19 vom erste Strömungsbereich 14 getrennt ist, das heißt, kein Umluftbetrieb möglich ist.

Im Bereich der Luftaustrittsöffnung 11 ist eine weitere, drehbare Klappe 18 (untere Klappe) angeordnet. Im Betriebszustand gemäß Figur 1 ist hierbei die untere Klappe 18 in einer horizontalen Position, so dass die durch die Raumtemperierungseinrichtung 100 in Strömungsrichtung S strömende Luft durch die Luftaustrittsöffnung 11 in den zu temperierenden Raum gelangen kann. Gleichzeitig ist durch die horizontale Position der unteren Klappe 18 der Luftaustrittsöffnung 23 zum Umluftkanal 19 gesperrt, das bedeutet, dass die innerhalb der Raumtemperierungseinrichtung 100 zirkulierende Luft nicht in den Umluftkanal 19 gelangen kann. Die die Luftaustrittsöffnung 23 nicht verschließende Position der Klappe 18 ist in Fig. 1 gestrichtelt angedeutet

Der Betriebszustand gemäß Figur 1 ist für einen Kühlbetrieb und für einen Heizbetrieb benutzbar. Beim Kühlbetrieb gelangt in der Regel warme Luft (Umgebungsluft) aus einem Raum 20 durch die Lufteintrittsöffnung 10 in den ersten Strömungsbereich 14, in dem der Plattenwärmeaustauscher 12 mit einem Phasenwechselmaterial angeordnet ist, welches in einem geladenen Zustand, das bedeutet in fester Phase, ist. Während die Umgebungsluft den Plattenwärmeaustauscher 12 umströmt, wird der Luft Wärme entzogen, wobei gleichzeitig das PCM von der festen in die flüssige Phase übergeht. Anschließend durchströmt die gekühlte Luft den zweiten Strömungsbereich 15 und verlässt die Raumtemperierungseinrichtung 100 durch die Luftaustrittsöffnung 11. Während des Kühlbetriebes besteht ebenfalls die Möglichkeit den Rippenrohrwärmeaustauscher 13 zu aktivieren. Hierbei wird gekühltes Wasser durch den Rippenrohrwärmeaustauscher 13 geführt und durch den Luftstrom erwärmt wieder abgeführt. Dieses gekühlte Wasser kann aus einem nicht explizit gezeigten Kühlsystem, insbesondere aus einer Kältemaschine, oder aus einem Wasserspeicher zur Verfügung gestellt werden. Die Aktivierung des Rippenrohrwärmeaustauschers 13 dient zur Kühlung bei Temperaturspitzen der Umgebungsluft oder nach einer Entladung des Plattenwärmeaustauschers 12, insbesondere des PCM.

Beim Heizbetrieb ist der Betriebszustand gemäß Figur 1 ebenfalls anwendbar. In diesem Fall wird kühlere Umgebungsluft durch den Ventilator 16 in den Innenraum der Raumtemperierungseinrichtung 100 angesaugt. Die Umgebungsluft strömt durch die Lufteintrittsöffnung 10 in Richtung des aufgeladenen Plattenwärmeaustauschers 12, dessen Phasenwechselmaterial in flüssiger Phase ist. Während die Umgebungsluft über den Plattenwärmeaustauscher 12 strömt, wird die latent gespeicherte Wärme im PCM frei und wird von der Umgebungsluft aufgenommen. Gleichzeitig wechselt das PCM von flüssiger in die feste Phase. Wie beim Kühlbetrieb kann der Rippenrohrwärmeaustauscher 13 zusätzlich aktiviert werden, falls der Plattenwärmeaustauscher 12 beispielsweise nicht genügend die Umgebungsluft auf eine gewünschte Temperatur erwärmen kann. Der Rippenrohrwärmeaustauscher 13 ist in diesem Fall mit einem nicht dargestellten Heizsystem verbunden, welches den Rippenrohrwärmeaustauscher 13 mit erwärmtem Wasser versorgt. Ist der Plattenwärmeaustauscher 12 entladen, besteht ebenfalls die Möglichkeit, eine Erwärmung der Umgebungsluft allein durch den Rippenrohrwärmeaustauscher 13 zu bewirken.

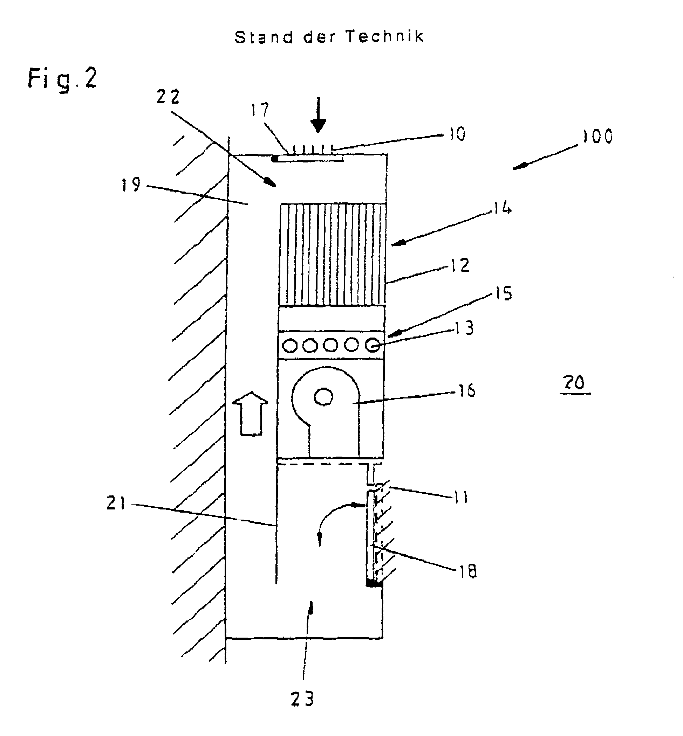

Figur 2 zeigt eine Raumtemperierungseinrichtung 100 in einem Umluftbetrieb. Die obere Klappe 17 befindet sich in einer horizontalen Position, wodurch ein Eintritt von Umgebungsluft durch die Lufteintrittsöffnung 10 verhindert wird. Die untere Klappe 18 weist eine vertikale Position auf, womit auch die Luftaustrittsöffnung 11 verschlossen ist. In diesem Betriebszustand strömt die innerhalb der Raumtemperierungseinrichtung 100 sich befindende Luft durch den ersten und den zweiten Strömungsbereich 14,15 und gelangt durch die Luftaustrittsöffnung in den Umluftkanal 19, der die Luft über die Lufteintrittsöffnung 22 in den ersten Strömungsbereich 14 führt. Da der Lufteintritt 10 und der Luftaustritt 11 durch die Klappen 17,18 verschlossen sind, ist der Luftstrom kurz geschlossen und zirkuliert im Umluftverfahren innerhalb der Raumtemperierungseinrichtung 100.

Dieser Betriebszustand gemäß Figur 2 ist insbesondere für den Ladevorgang des PCM vorgesehen. Soll beispielsweise für den Kühlbetrieb das PCM des Plattenwärmeaustauschers 12 geladen werden, wird die Raumtemperierungseinrichtung 100 im Umluftverfahren betrieben, wobei gleichzeitig der Rippenrohrwärmeaustauscher 13 aktiviert ist und mit dem Kühlsystem verbunden ist, der den Rippenrohrwärmeaustauscher 13 mit gekühltem Wasser versorgt. Die innerhalb der Raumtemperierungseinrichtung 100 zirkulierende Luft wird am Rippenrohrwärmeaustauscher 13 gekühlt und strömt anschließend über den Umluftkanal 19 in den ersten Strömungsbereich 14, in dem der Plattenwärmeaustauscher 12 mit dem PCM angeordnet ist. Während die gekühlte Luft den Plattenwärmeaustauscher 12 umströmt, wird das PCM von der flüssigen in die feste Phase versetzt und somit für den Kühlbetrieb aufgeladen.

Der Aufladevorgang des PCM für den Heizbetrieb erfolgt ebenfalls mit dem in Figur 2 gezeigten Betriebszustand. Hierbei ist der Rippenrohrwärmeaustauscher 13 mit einem Heizsystem verbunden, das den Wärmeaustauscher 13 mit erwärmtem Wasser versorgt. Die zirkulierende Luft wird durch den Rippenrohrwärmeaustauscher 13 erwärmt und gelangt über den Umluftkanal 19 zum Plattenwärmeaustauscher 12. Dort wird das PCM durch die erwärmte Luft aufgeladen, in dem das PCM von der festen in die flüssige Phase versetzt wird. Bei diesem Phasenübergang verbraucht das PCM Wärme, die, solange der flüssige Zustand bestehen bleibt, latent gespeichert ist.

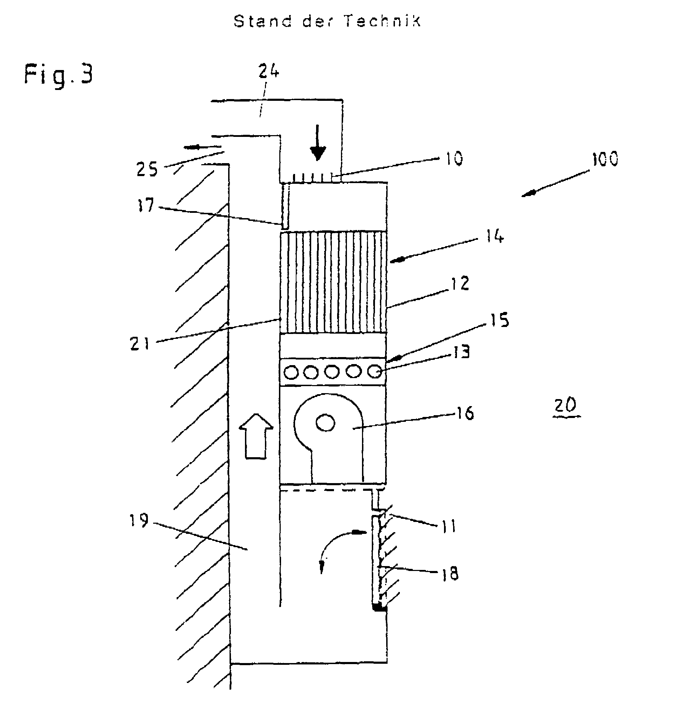

In Figur 3 wird ein weiterer Betriebszustand gezeigt, um das PCM des Plattenwärmeaustauschers 12 zu laden. In diesem Betriebszustand befinden sich beide Klappen 17,18 in ihrer vertikalen Position. Das bedeutet, dass die Lufteintrittsöffnung 10 geöffnet und die Luftaustrittsöffnung 11 geschlossen ist. Um das PCM für den Kühlbetrieb aufzuladen, wird kühle Luft, insbesondere Nachtluft über einen Kanal 24 in die Raumtemperierungseinrichtung 100 angesaugt, wodurch das entladene PCM in die feste Phase versetzt wird. Die Luft wird anschließend nach Außen über einen Kanal 25, der unmittelbar an den Umluftkanal 19 angeschlossen ist, geführt.

Ebenfalls ist es denkbar, für den Heizbetrieb den in Figur 3 gezeigten Betriebszustand zu nutzen, um das PCM aufzuladen. In diesem Fall wird warme Außenluft über den Plattenwärmeaustauscher 12 geführt, wodurch das entladene PCM von der festen in die flüssige Phase versetzt wird.

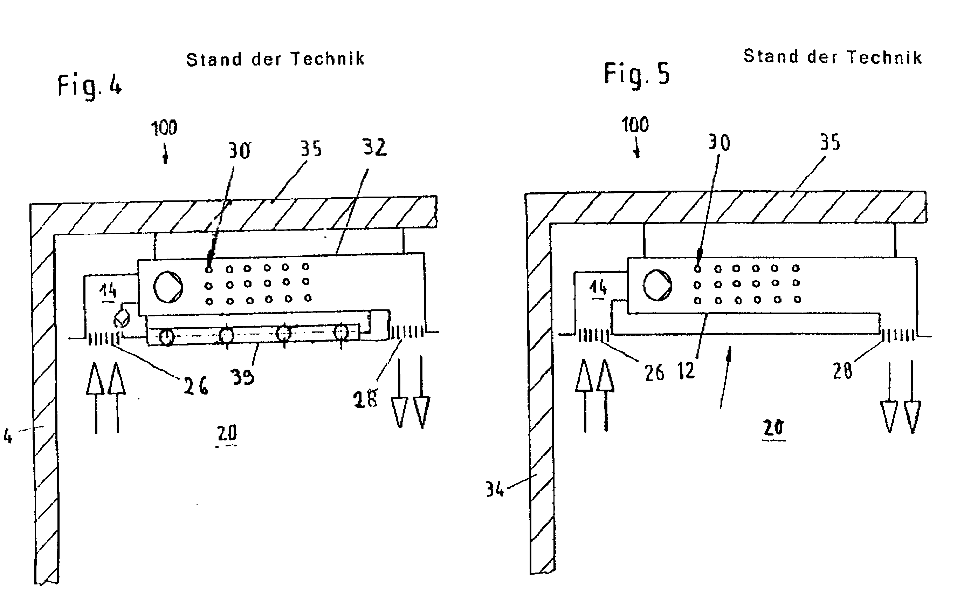

In einem weiteren Ausführungsbeispiel entsprechend Figur 4 können PCM-Elemente 30 in einer Raumtemperierungseinrichtung 100 Verwendung finden, bei der die Wärme nur tageszeitabhängig anfällt und die mit einem leistungsmäßig nicht so stark dimensionierten Wärmetauscher 32 verbunden ist. Über die Zwischenschaltung der 18 PCM-Elemente 30 kann auch ein starker Wärmeanfall für eine bestimmte Zeit verarbeitet werden, ohne dass der Wärmetauscher 32 für besonders hohe Kapazitäten ausgelegt sein muss. Während des Kühlbetriebes besteht ebenfalls die Möglichkeit, den Wärmeaustauscher 39 zu aktivieren. Hierbei wird gekühltes Wasser durch den Wärmeaustauscher 39 geführt und durch Wärme aus dem Wärmetauscher 32 erwärmt und wieder abgeführt. Dieses gekühlte Wasser kann aus einem nicht explizit gezeigten Kühlsystem, insbesondere aus einer Kältemaschine, oder aus einem Wasserspeicher zur Verfügung gestellt werden. Die Aktivierung des Wärmeaustauschers 39 dient zur Kühlung bei Temperaturspitzen der Umgebungsluft oder nach einer Entladung des Wärmetauschers 32, insbesondere der PCM-Elemente. Dazu ist der Wärmetauscher 32 über Anschlussleitungen mit dem Wärmetauscher 39 verbunden, welcher direkt unter dem Wärmetauscher 32 angeordnet ist. Die einzelnen, mit Phasenwechselmaterial versehenen PCM-Elemente 30 sind so ausgelegt, dass der Schmelzpunkt des Phasenwechselmaterials bei einer kritischen Temperatur liegt, bei welcher der (relativ gering dimensionierte) Wärmetauscher entsprechend auftretende Wärmespitzen nicht mehr bewältigen kann. Nun schmilzt das PCM und speichert die überschüssige Wärme.

Figur 5 zeigt die Verwendung PCM-Elemente 30 als Vorrichtung zur Kühlung eines geschlossenen Raumes. Hierbei strömt die Raumluft über eine Lufteintrittsöffnung 22 in das Gehäuse 27 und wird durch das Rohrregister 40, welches aus 18 einzelnen PCM-Elementen 30, welche Phasenwechselmaterial aufweist, besteht, gekühlt. Das Phasenwechselmaterial wird dabei derart gewählt, dass sein Schmelzpunkt bei der Temperatur liegt, ab welcher die Luft abgekühlt werden soll. Aufgrund der optimalen Ausgestaltungen als zylinderförmige Elemente wird ein optimaler Wärmeübergang zwischen der zu kühlenden Luft und den einzelnen, mit Phasenwechselmaterial gefüllten Umhüllungen 31 geschaffen, so dass das PCM-Element 30 eine sehr große Wärmemenge aufnehmen kann. Eine Kühlung kann beispielsweise durch eine Kühlflüssigkeit oder ein Kühlgas oder die Speisung mit Kühlluft, vorzugsweise Nachtluft, erfolgen.

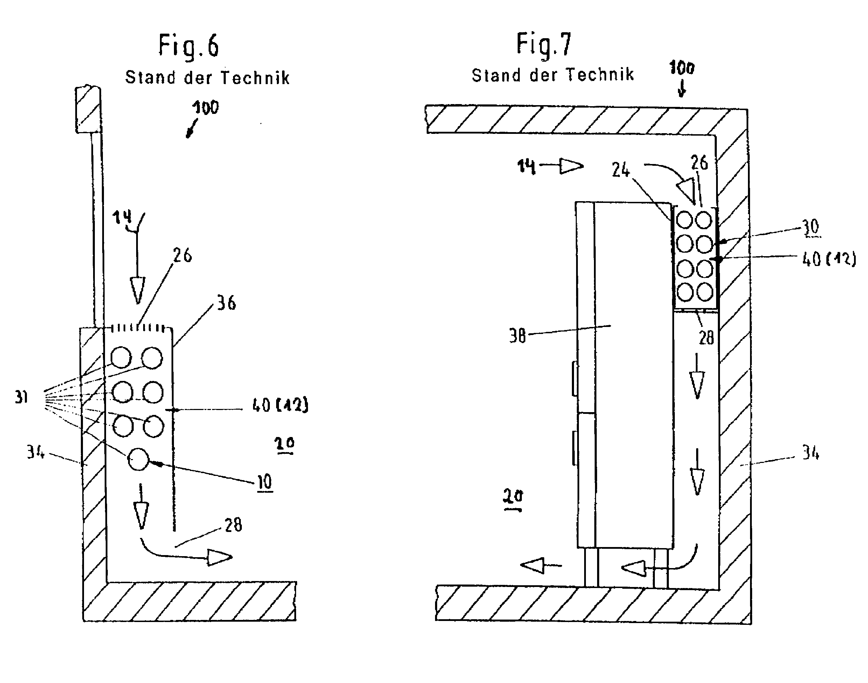

Figur 6 zeigt eine weitere Ausgestaltung zur Kühlung von Raumluft. Dabei sind die einzelnen Umhüllungen 31, also das Rohrregister 40, innerhalb einer Brüstung 36 angeordnet. Die Luft wird über eine Lufteintrittsöffnung 26 in das Brüstungsgehäuse eingeführt und tritt aus der Luftaustrittsöffnung 28 aus. Die einzelnen Umhüllungen 31 der PCM-Elemente 30 können zu deren Kühlungen Rohrleitungen aufweisen, durch welche eine Kühlflüssigkeit ström. Weiterhin ist es möglich, das Brüstungsgehäuse mit Ein- und Austritten für Außenluft zu kombinieren, so dass beispielsweise nachts jedes PCM-Element 30 mit Außenluft gekühlt und tagsüber von der Raumluft erwärmt werden kann. In analoger Weise lässt sich eine Vorrichtung zum Kühlen von Raumluft unter Verwendung von PCM-Elemente 30 hinter einem Schrank 38 anordnen, wie in Figur 7 dargestellt.

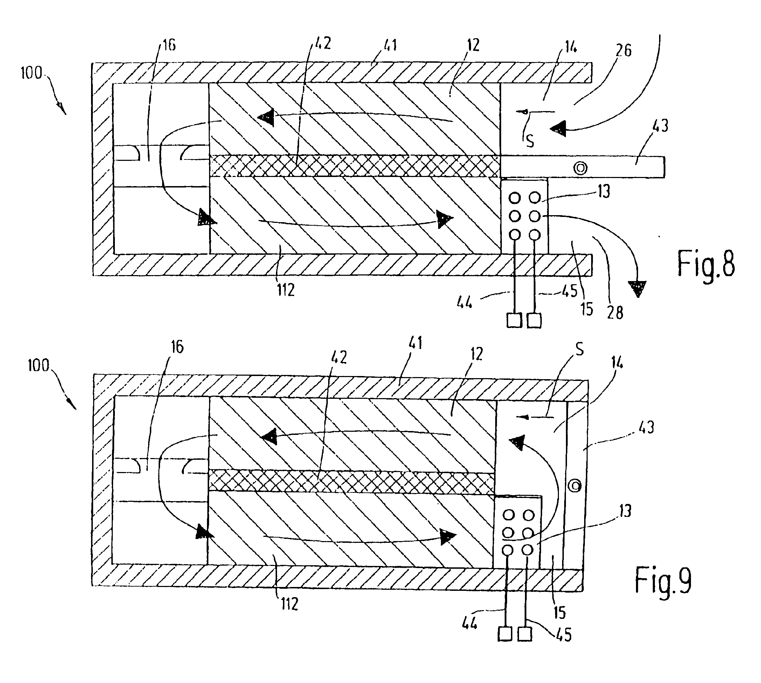

In den Figuren 8 bis 13 ist die Raumtemperierungseinrichtung 100 als Kompakteinheit in Form eines Funktionsschemas in verschiedenen Anwendungsfällen dargestellt worden.

Aus den Figuren 8 und 9 lässt sich das grundsätzliche Funktionsschema erkennen. Die Raumtemperierungseinrichtung 100 ist so aufgebaut, dass in dem feuerfesten Gehäuse 41 zwei erste Wärmetauscher 12, 112 in Reihe geschaltet angeordnet sind, die durch eine Trennwand 42 voneinander beabstandet sind. In Strömungsrichtung S wird der erste Wärmetauscher 12 durchströmt und die Umluft durchläuft dann den Ventilator 16 um in den weiteren ersten Wärmetauscher 112 einzuströmen. Beide Wärmetauscher 12, 112 enthalten das PCM-Material. Anschließend durchströmt die Umluft den zweiten Wärmetauscher 13, der im zweiten Strömungsbereich 15 angeordnet ist. Im Bereich der Lufteintrittsöffnung 26 bzw. Luftaustrittsöffnung 28 ist als Umschaltmittel eine Klappe 43 angeordnet, die in Figur 8 eine mit der Trennwand 42 parallele Stellung einnimmt und somit die Lufteintrittsöffnung 26 und die Luftaustrittsöffnung 28 öffnet. In diesem Betriebszustand ist die Raumtemperierungseinrichtung 100 für einen Kühlbetrieb und einen Heizbetrieb benutzbar. Beim Kühlbetrieb gelangt in der Regel warme Umgebungsluft aus einem nicht dargestellten Raum durch die Lufteintrittsöffnung 26 (wie durch den Pfeil angedeutet) in den ersten Strömungsbereich 14, in dem der Plattenwärmetauscher 12 mit dem Phasenwechselmaterial angeordnet ist, welches in einem geladenen Zustand, das bedeutet in der festen Phase ist. Während die Umgebungsluft den Plattenwärmetauscher 12 umströmt, wird der Luft Wärme entzogen, wobei gleichzeitig das PCM von der festen in die flüssige Phase übergeht. Anschließend wird die schon gekühlte Luft vom Ventilator 16 dem zweiten Plattenwärmetauscher 112 zugeführt und dort durch den Phasenübergang des PCM ebenfalls gekühlt. Anschließend durchströmt die Luft den Rippenwärmetauscher 13. Während des Kühlungsbetriebs besteht hier ebenfalls die Möglichkeit, den Rippenrohrwärmetauscher 13 zu aktivieren. Hierbei wird gekühltes Wasser über die Zu- und Ableitungen 44, 45 dem Rippenrohrwärmetauscher zugeführt und durch den Luftstrom erwärmt wieder abgeführt. Die Aktivierung des Rippenrohrwärmetauschers 13, der im zweiten Strömungsbereich 15 angeordnet ist, dient zur Kühlung bei Temperaturspitzen der Umgebungsluft oder nach einer Entladung der Plattenwärmetauscher 12, 112.

In Figur 9 ist der Speicherbetrieb dargestellt. Dabei wird die Luft im Umluftbetrieb geführt und hierbei durch den Rippenrohrwärmetauscher 13 gekühlt. Die Klappe 43 befindet sich hierbei in einer horizontalen Position, wodurch der Eintritt von Umgebungsluft verhindert wird. In diesem Betriebszustand strömt die innerhalb der Raumtemperierungseinrichtung 100 befindliche Luft durch den ersten und den zweiten Strömungsbereich 14, 15 und durchströmt die Wärmetauscher 12, 112. Dieser Betriebszustand ist für den Ladebetrieb des PCM vorgesehen. Hierbei werden die Plattenwärmetauscher 12, 112 geladen, denn durch die Durchströmung der Plattenwärmetauscher 12, 112 von gekühlter Luft wird das PCM von der flüssigen in die feste Phase versetzt und somit für den Kühlbetrieb aufgeladen.

Der Heizbetrieb entspricht der anhand von den Figuren 1 und 2 erläuterten grundsätzlichen Funktionsweise.

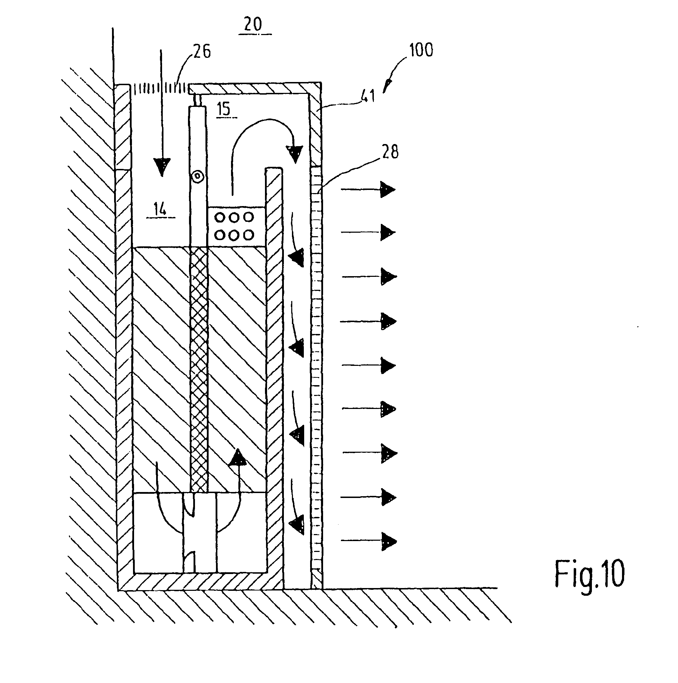

Die in den Figuren 10 bis 13 dargestellten Anwendungs- und Einbaufälle der Raumtemperierungseinrichtung 100 beruhen alle auf der gleichen Funktionsweise. Bei der in Figur 10 dargestellten Anordnung der Raumtemperierungseinrichtung 100 strömt die Luft aus einem Raum 20 über eine Lufteintrittsöffnung 26 in das Gehäuse 41 und damit in den ersten Strömungsbereich 14, während im Bereich des zweiten Strömungsbereichs 15 eine sich horizontal weitgehend über die Seite des Gehäuses 41 erstreckende Austrittsöffnung 28 ausgebildet ist, um eine Luftschichtung im Raum 20 zu erreichen.

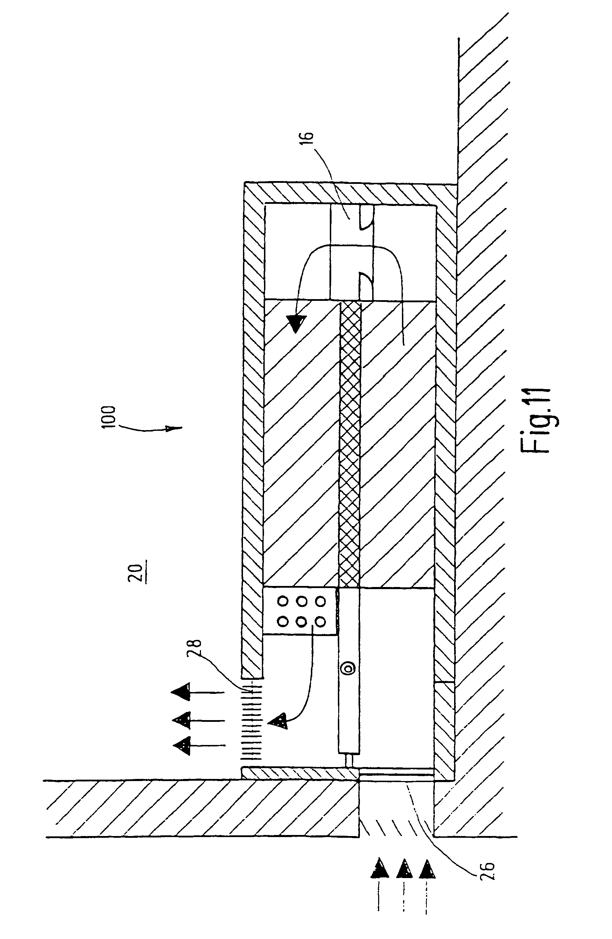

Bei der Ausführungsform gemäß Figur 11 ist die Raumtemperierungseinrichtung 100 auf dem Fußboden eines Raumes 20 angeordnet, wobei die Lufteintrittsöffnung 26 einen Außenwandanschluss zur Einströmung von Frischluft außerhalb des Gebäudes aufweist. Die Luftaustrittsöffnung 28 ist dabei zum Raum 20 gerichtet, so dass aus dem Außenbereich Frischluft über den Ventilator 16 angesaugt und gekühlt oder beheizt über die Luftaustrittsöffnung 28 dem Raum 20 zugeführt werden kann. Diese Ausführungsform eignet sich besonders für den Fußbodeneinbau mit einem Doppelboden.

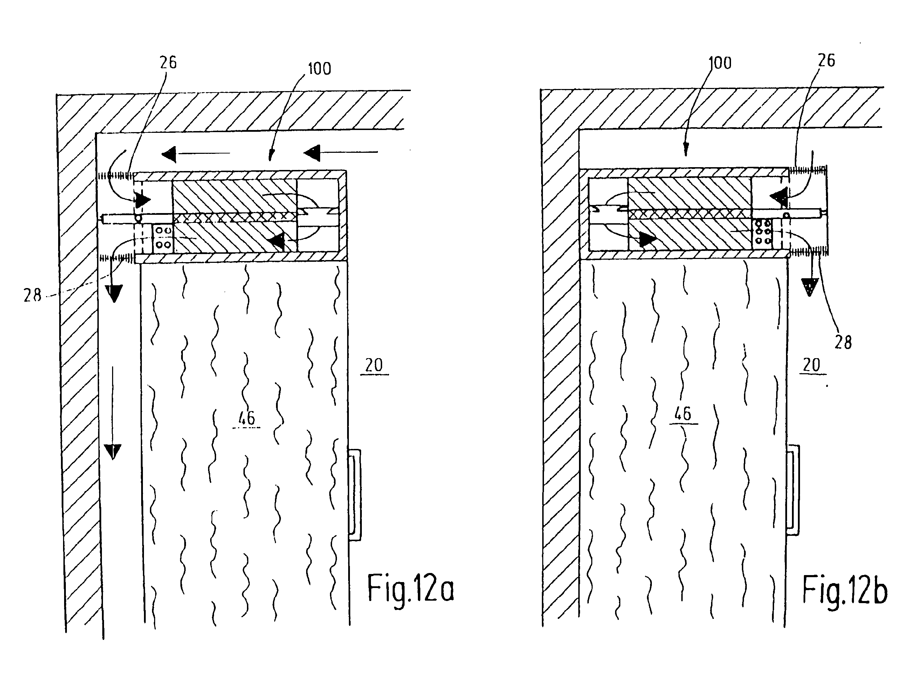

Bei den in Figur 12a und 12b dargestellten Anwendungsfällen wird die Raumtemperierungseinrichtung 100 auf einem Schrankelement, das sich in einem Raum 20 befindet, angeordnet, wobei der Unterschied zwischen der Anordnung gemäß Figur 12a und der Anordnung gemäß Figur 12b lediglich darin besteht, dass zwar über die Lufteintrittsöffnung 26 Luft aus dem Deckenbereich angesaugt wird, während gemäß Figur 12a die Luftaustrittsöffnung 28 in den Bereich hinter das Wandelement 26 gerichtet ist, während bei der Ausführungsform gemäß Figur 12b die Luftaustrittsöffnung 28 in den Bereich vor dem Schrankelement 46 gerichtet ist.

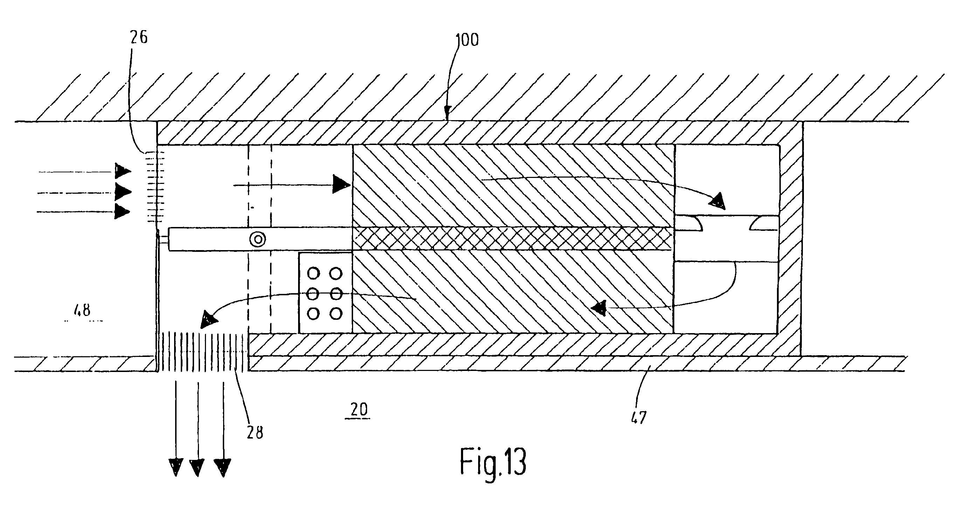

Die in Figur 13 dargestellte Ausführungsform der Raumtemperierungseinrichtung 100 betrifft den Einbau in einer Decke, wobei unter der Zimmerdecke eine abgehängte Decke 47 vorgesehen ist. Hierbei ist die Raumtemperierungseinrichtung 100 so angeordnet, dass sie sich zwischen der Raumdecke und der abgehängten Decke 47 befindet und über die Lufteintrittsöffnung 26 entweder zugeführte Raumluft aus dem Raum 20 oder zugeführte Frischluft ansaugt und diese über die Luftaustrittsöffnung 28 in den Raum 20 einbläst.

Die Funktionsweise der Raumtemperierungseinrichtung 100 gemäß Figur 10 bis 13 entspricht der anhand von Figur 8 und 9 erläuterten Funktionsweise.

### BEZUGSZEICHENLISTE

- 100: Raumtemperierungseinrichtung
- 10: Lufteintrittsöffnung
- 11: Luftaustrittsöffnung
- 12: erster Wärmeaustauscher, Plattenwärmeaustauscher
- 13: zweiter Wärmeaustauscher, Rippenrohrwärmeaustauscher
- 14: erster Strömungsbereich
- 15: zweiter Strömungsbereich
- 16: Ventilator
- 17: Umschaltmittel, Klappe
- 18: Umschaltmittel, Klappe
- 19: Umluftkanal
- 20: Raum
- 21: Wandung
- 22, 26: Lufteintrittsöffnung
- 23, 28: Luftaustrittsöffnung
- 24: Kanal
- 25: Kanal
- 30: PCM-Element
- 31: Umhüllung
- 32: Wärmetauscher
- 34: Wand
- 35: Decke
- 36: Brüstung
- 37: abgehängte Decke
- 38: Schrank
- 39: Wärmetauscher
- 40: Rohrregister
- 41: Gehäuse
- 42: Trennwand
- 43: Klappe
- 44: Zuleitung
- 45: Ableitung
- 46: Schrankelement
- 47: abgehängte Decke
- 48: Zwischenraum
- S: Strömungsrichtung

## Patentansprüche

1. Raumtemperierungseinrichtung (100) mit einer Lufteintrittsöffnung (26) und einer Luftaustrittsöffnung (28), wobei mindestens ein erster Wärmeaustauscher (12), der ein Phasenwechselmaterial (Phase Change Material) umfasst, in einem ersten Strömungsbereich (14) der Luft angeordnet ist, wobei wobei der erste Wärmetauscher (12) im Strömungsbereich (14) der Umgebungsluft, insbesondere der Raumluft, angeordnet ist und ein zweiter, von einem Fluid durchströmter Wärmeaustauscher (13) in einem zweiten Strömungsbereich (15) der Umgebungsluft, der sich an den ersten Strömungsbereich (14) anschließt, oder in einer Strömungsrichtung (S) vor dem ersten Strömungsbereich (14) angeordnet ist, **dadurch gekennzeichnet, dass** mindestens zwei erste Wärmeaustauscher (12, 112), die jeweils ein Phasenwechselmaterial (Phase Change Material) umfassen, in Strömungsrichtung (S) hintereinander als Reihenschaltung oder in Strömungsrichtung (S) nebeneinander als Parallelschaltung angeordnet sind und in Strömungsrichtung (S) zwischen zwei ersten Wärmeaustauschern (12, 112) ein Ventilator (16) angeordnet ist.

2. Raumtemperierungseinrichtung nach Anspruch 1, **dadurch gekennzeichnet, dass** der erste Wärmeaustauscher (12) als Plattenwärmeaustauscher ausgebildet ist.

3. Raumtemperierungseinrichtung nach einem der Ansprüche 1 oder 2, **dadurch gekennzeichnet, dass** der zweite Wärmeaustauscher (13) als Rippenrohrwärmeaustauscher ausgebildet ist.

4. Raumtemperierungseinrichtung nach einem der Ansprüche 1 bis 3, **dadurch gekennzeichnet, dass** der zweite Wärmeaustauscher (13) als Lamellenrohrwärmeaustauscher ausgebildet ist.

5. Raumtemperierungseinrichtung nach einem der Ansprüche 1 bis 4, **dadurch gekennzeichnet, dass** der erste Wärmetaustauscher (12) oder der zweite Wärmetauscher (13) der Lufteintrittsöffnung zugewandt ist.

6. Raumtemperierungseinrichtung nach einem der Ansprüche 1 bis 5, **dadurch gekennzeichnet, dass** das Phasenwechselmaterial ein Salz, Salzhydrat, ein Gemisch von Salzen und/oder Salzhydraten und/oder ein organisches Material ist.

7. Raumtemperierungseinrichtung nach Anspruch 6, **dadurch gekennzeichnet, dass** das organische Material Paraffin ist und das Gemisch Magnesium- und Lithiumnitrat aufweist.

8. Raumtemperierungseinrichtung nach einem der Ansprüche 1 bis 7, **dadurch gekennzeichnet, dass** die Raumtemperierungseinrichtung (100) in einem Gehäuse (41) insbesondere als Kompakteinheit angeordnet ist.

9. Raumtemperierungseinrichtung nach einem der Ansprüche 1 bis 8, **dadurch gekennzeichnet, dass** die Raumtemperierungseinrichtung (100) zur Raumlufterwärmung und zur Raumluftkühlung einsetzbar ist.

10. Raumtemperierungseinrichtung nach einem der Ansprüche 1 bis 9, **dadurch gekennzeichnet, dass** das Fluid Wasser ist.

11. Raumtemperierungseinrichtung nach einem der Ansprüche 1 bis 10, **dadurch gekennzeichnet, dass** der zweite Wärmeaustauscher (13) mit einem Kühlsystem, insbesondere mit einer Kältemaschine, und/oder einem Heizsystem verbunden ist.

## Claims

1. Room temperature conditioner (100) with an air inlet opening (26) and an air outlet opening (28), whereby at least one heat exchanger (12) which comprises a phase change material is placed in a first flow area (14) of the air, whereby the first heat exchanger (12) is placed in the flow area (14) of the ambient air, in particular of the room air, and a second heat exchanger (13) flown through by a fluid is placed in a second flow area (15) of the surrounding air which follows the first flow area (14) or in a flow direction (S) before the first flow area (14), **characterized in that** at least two first heat exchangers (12, 112) which comprise respectively one phase change material each are placed in flow direction (S) the one behind the other as series mounting or in flow direction (S) the one besides the other as parallel mounting and a fan (16) is placed in flow direction (S) between two first heat exchangers (12, 112).

2. Room temperature conditioner according to claim 1, **characterized in that** the first heat exchanger (12) is configured as a plate heat exchanger.

3. Room temperature conditioner according to any of the claims 1 or 2, **characterized in that** the second heat exchanger (13) is configured as a ribbed tube heat exchanger.

4. Room temperature conditioner according to any of the claims 1 to 3, **characterized in that** the second heat exchanger (13) is configured as a heat exchanger with laminations on tubes.

5. Room temperature conditioner according to any of the claims 1 to 4, **characterized in that** the first heat exchanger (12) or the second heat exchanger (13) is turned to the air inlet opening.

6. Room temperature conditioner according to any of the claims 1 to 5, **characterized in that** the phase change material is a salt, a salt hydrate, a mixture of salts and/or salt hydrates and/or an organic material.

7. Room temperature conditioner according to claim 6, **characterized in that** the organic material is parrafin and the mixture magnesium and lithium nitrate.

8. Room temperature conditioner according to any of the claims 1 to 7, **characterized in that** the room temperature conditioner (100) is placed in a casing (41), in particular as a compact unit.

9. Room temperature conditioner according to any of the claims 1 to 8, **characterized in that** the room temperature conditioner (100) can be used for room air heating and for room air cooling.

10. Room temperature conditioner according to any of the claims 1 to 9, **characterized in that** the fluid is water.

11. Room temperature conditioner according to any of the claims 1 to 10, **characterized in that** the second heat exchanger (13) is connected with a cooling system, in particular with a refrigerating machine, and/or a heating system.

## Revendications

1. Dispositif de températion de l'air ambiant (100) avec une ouverture d'entrée de l'air (26) et une ouverture de sortie de l'air (28), au moins un premier échangeur thermique (12) qui comprend une matière de changement de phase (phase change material) étant placé dans une première zone d'écoulement (14) de l'air, le premier échangeur thermique (12) étant placé dans la zone d'écoulement (14) de l'air environnant, en particulier de l'air ambiant, et un second échangeur thermique (13) traversé par un fluide étant placé dans une seconde zone d'écoulement (15) de l'air environnant qui suit la première zone d'écoulement (14) ou dans un sens d'écoulement (S) avant la première zone d'écoulement (14), **caractérisé en ce qu'**au moins deux premiers échangeurs thermiques (12, 112), qui comprennent respectivement une matière de changement de phase (phase change material) sont placés dans le sens de l'écoulement (S) l'un derrière l'autre comme montage en série ou dans le sens de l'écoulement (S) l'un à côté de l'autre comme montage parallèle et un ventilateur (16) est placé dans le sens de l'écoulement (S) entre deux premiers échangeurs thermiques (12, 112).

2. Dispositif de températion de l'air ambiant selon la revendication 1, **caractérisé en ce que** le premier échangeur thermique (12) est configuré comme un échangeur thermique à plaques.

3. Dispositif de températion de l'air ambiant selon l'une des revendications 1 ou 2, **caractérisé en ce que** le second échangeur (13) est configuré comme un échangeur thermique à tubes à ailettes.

4. Dispositif de températion de l'air ambiant selon l'une des revendications 1 à 3, **caractérisé en ce que** le second échangeur thermique (13) est configuré comme un échangeur thermique à tubes et lamelles.

5. Dispositif de températion de l'air ambiant selon l'une des revendications 1 à 4, **caractérisé en ce que** le premier échangeur thermique (12) ou le second échangeur thermique (13) est tourné vers l'ouverture d'entrée de l'air.

6. Dispositif de températion de l'air ambiant selon l'une des revendications 1 à 5, **caractérisé en ce que** la matière de changement de phase est un sel, un hydrate de sel, un mélange de sels et/ou d'hydrates de sel et/ou un matériau organique.

7. Dispositif de températion de l'air ambiant selon la revendication 6, **caractérisé en ce que** le matériau organique est la paraffine et le mélange présente un nitrate de magnésium et de lithium.

8. Dispositif de températion de l'air ambiant selon l'une des revendications 1 à 7, **caractérisé en ce que** le dispositif de températion de l'air ambiant (100) est placé dans un bâti (41), en particulier comme unité compacte.

9. Dispositif de températion de l'air ambiant selon l'une des revendications 1 à 8, **caractérisé en ce que** le dispositif de températion de l'air ambiant (100) peut être utilisé pour le chauffage de l'air ambiant et pour le refroidissement de l'air ambiant.

10. Dispositif de températion de l'air ambiant selon l'une des revendications 1 à 9, **caractérisé en ce que** le fluide est de l'eau.

11. Dispositif de températion de l'air ambiant selon l'une des revendications 1 à 10, **caractérisé en ce que** le second échangeur thermique (13) est relié à un système de refroidissement, en particulier à une machine frigorifique, et/ou à un système de chauffage.
